# EUROPEAN PATENT SPECIFICATION

(11) **EP 2 676 871 B1**
(45) Date of publication and mention of the grant of the patent: **17.08.2016**
(21) Application number: 12747122.5
(22) Date of filing: 30.01.2012
(51) Int. Cl.: B62J 6/00, B62L 1/00

(54) **BIKE BRAKING DEVICE HAVING ALARM**
FAHRRADBREMSVORRICHTUNG MIT ALARMFUNKTION
DISPOSITIF DE FREINAGE DE VÉLO AYANT UNE ALARME

(30) Priority: 17.02.2011 CN 201110045569
(43) Date of publication of application: 25.12.2013
(73) Proprietor: Canknow International Ind. Co., Ltd., Taichung, Taiwan (TW)
(72) Inventor: SU, Weichung, Taichung Taiwan (TW)
(74) Representative: Becker Kurig Straus
(86) International application number: PCT/CN2012/070770
(87) International publication number: WO 2012/109957

(56) References cited:
- EP-A1- 1 437 295
- BE-A3- 1 009 273
- CN-U- 201 494 577
- CN-Y- 2 595 640
- CN-Y- 2 644 268
- DE-U1- 20 317 045
- DE-U1- 29 603 968
- FR-A1- 2 821 049
- US-A- 3 088 549
- US-A- 3 906 443
- US-A- 3 906 443

## Description

### BACKGROUND OF THE INVENTION

### 1. Field of the Invention

The present invention relates to bicycle brake technology and more particularly, to a bicycle brake device having a warning function.

### 2. Description of the Related Art

BE 1 009 273 A3 is considered the closest prior art and discloses all of the features of the preamble of claim 1. Taiwan Patent 553149 discloses a brake light for bicycle, which comprises a brake shoe and a light-emitting unit. The brake shoe is affixed to a brake arm and movable with the brake arm, comprising a touch rod. The light-emitting unit comprises a battery and a warning device. The battery is mounted in the brake shoe, having two opposite terminals. The warning device is mounted in one side of the brake shoe, having one contact pin thereof electrically connected with one terminal of the battery. When the brake shoe is moved by the brake arm to force the resilient touch rod into contact with the wheel rim, the touch rod will force the other contact pin of the warning device into contact with the other terminal of the battery. At this time, the battery is electrically connected to provide battery power to the warning device, causing the warning device to give off light for warning.

In the aforesaid prior art design, the touch rod of the brake shoe has a rib connected to an annular groove at the brake shoe so that the touch rod is elastically movable in the annular groove. When the touch rod touches the wheel ring, it will be forced backwards to push the other contact pin of the warning device. According to this design, the touch rod is not affixed to the brake shoe. Thus, the touch rod tends to be biased by an external force. If the touch rod is improperly biased, it may be unable to positively push the respective contact pin of the warning device, resulting in a contact error.

### SUMMARY OF THE INVENTION

The present invention has been accomplished under the circumstances in view. It is the main object of the present invention to provide a bicycle brake device having a warning function, which provides an excellent electric contact effect for generating a warning signal positively.

To achieve this and other objects of the present invention, a bicycle brake device comprises a brake shoe, a warning device, a power supply device and two conductors. The brake shoe is connected to a brake caliper and movable with the brake caliper. The warning device is adapted for generating a warning signal. The power supply device is electrically connected with the warning device for providing the warning device with the necessary working power. The conductors are separately mounted in the brae shoe and respectively electrically connected with the warning device and the power supply device. Each conductor has one end thereof exposed to the outside of the brake shoe. When the brake shoe are moved with the brake caliper and pressed on a wheel rim or brake disc of the bicycle, the conductors are electrically connected, causing the warning device to generate a warning signal, achieving a warning effect.

### BRIEF DESCRIPTION OF THE DRAWINGS

FIG. 1 is an elevational view of a bicycle brake device in accordance with a first example of the present invention.
FIG. 2 is a sectional view of the bicycle brake device in accordance with the first example of the present invention.
FIG. 3 is a circuit block diagram of the bicycle brake device in accordance with the first example of the present invention.
FIG. 4 is a schematic drawing illustrating an operation status of the bicycle brake device in accordance with the first example of the present invention.
FIG. 5 is a sectional view of a bicycle brake device in accordance with a second example of the present invention.
FIG. 6 is a schematic drawing illustrating a bicycle brake device installed in a bicycle in accordance with a third example of the present invention.
FIG. 7 is an elevational view of a power supply device for a bicycle brake device in accordance with a fourth example of the present invention.
FIG. 8 is a schematic drawing illustrating an operation status of a bicycle brake device in accordance with a fifth example of the present invention.
FIG. 9 is a schematic drawing illustrating an operation status of a bicycle brake device in accordance with a sixth example of the present invention.
FIG. 10 is a schematic drawing illustrating an operation status of a bicycle brake device in accordance with a first embodiment of the present invention
FIG. 11 is a circuit block diagram of the bicycle brake device in accordance with the first embodiment of the present invention.
FIG. 12 is a schematic drawing illustrating an operation status of a bicycle brake device in accordance with a second embodiment of the present invention.

### DETAILED DESCRIPTION OF THE INVENTION

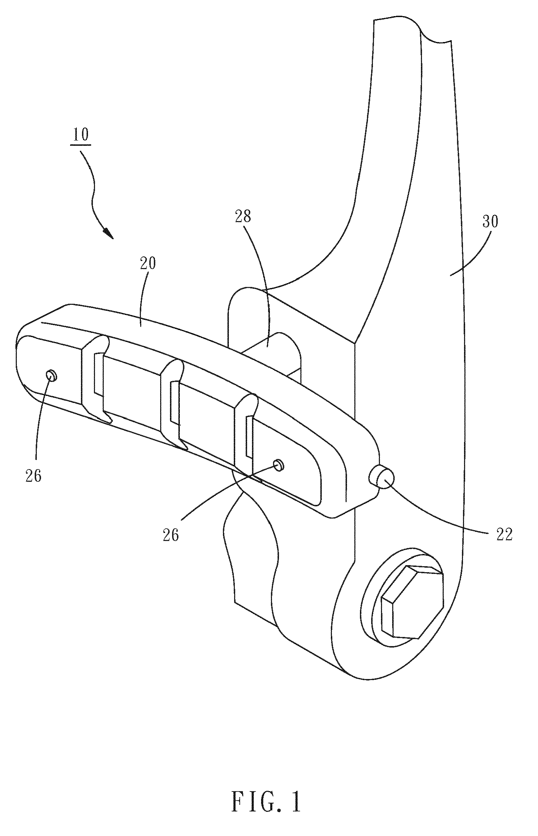

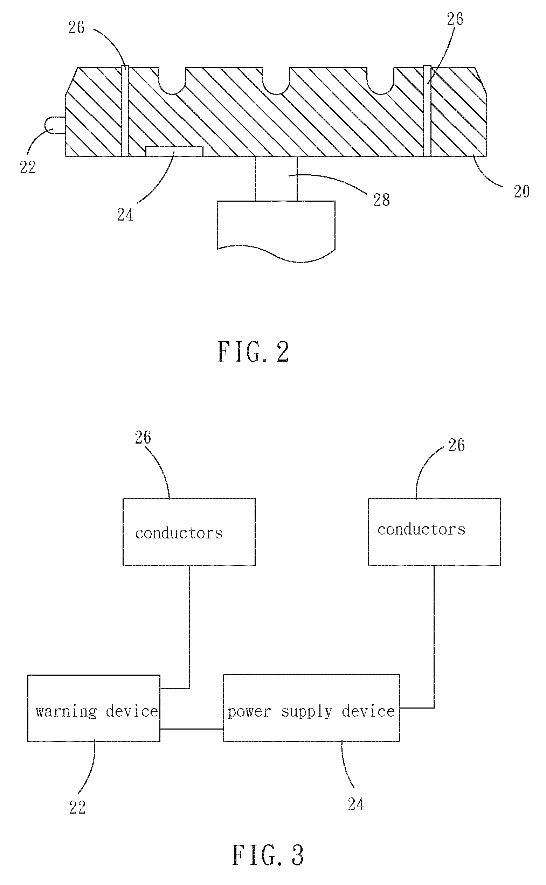

Referring to FIG. 1, a bicycle brake device **10** in accordance with a first example of the invention is shown comprising a brake shoe **20,** a warning device **22,** a power supply device **24** (see FIG. 2) and two conductors **26.**

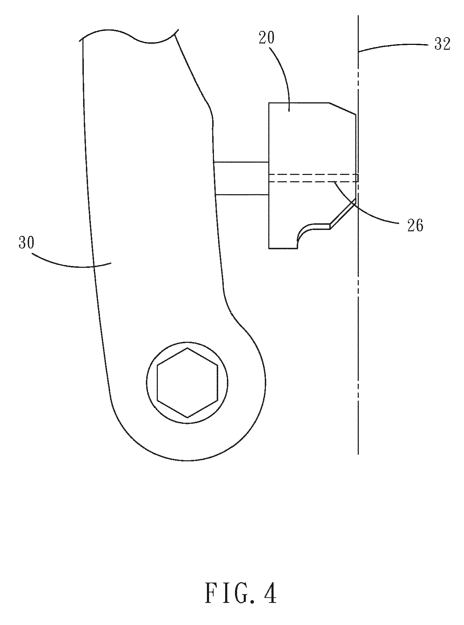

The brake shoe **20** is fixedly fastened to a brake caliper **30** by a connection rod **28,** and movable with the brake caliper **30** toward a wheel rim **32** (see FIG 4).

The warning device **22** can be a light-emitting diode or buzzer. According to this example, the warning device **22** is a light-emitting diode installed in a rear end of the brake shoe **20** and exposed to the outside of the brake shoe **20.**

The power supply device **24** according to this example is a built-in battery set inside the brake shoe **20,** as shown in FIG. 2, and electrically connected with the warning device **22** by an electric wire for providing the warning device **22** with the necessary working power.

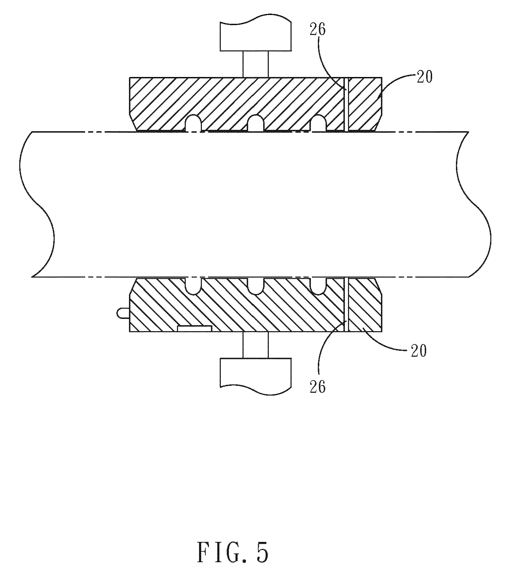

The conductors **26** according to this example are tin rods fixedly mounted in the brake shoe **20** and spaced from each other at a distance, each having one end thereof exposed to the surface of the brake shoe **20.** As shown in FIG. 3, one conductor **26** is electrically connected with the warning device **22** by an electric wire, and the other conductor **26** is electrically connected with the power supply device **24** by an electric wire. Arranging the two conductors **26** in one same brake shoe **20** is not a limitation. Alternatively, as shown in FIG. 5, the two conductors **26** can be respectively installed in one respective brake shoe **20.**

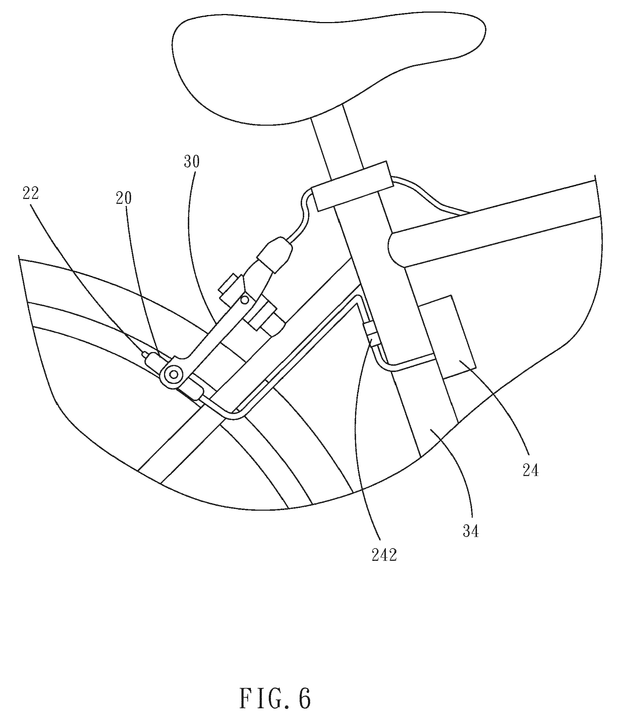

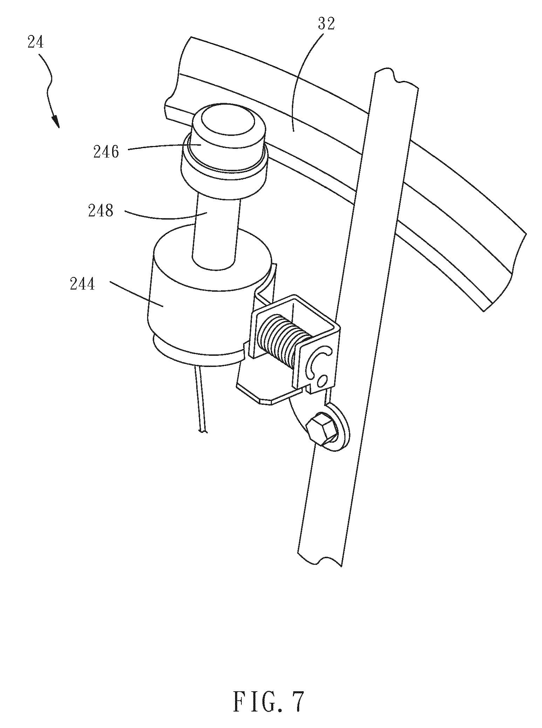

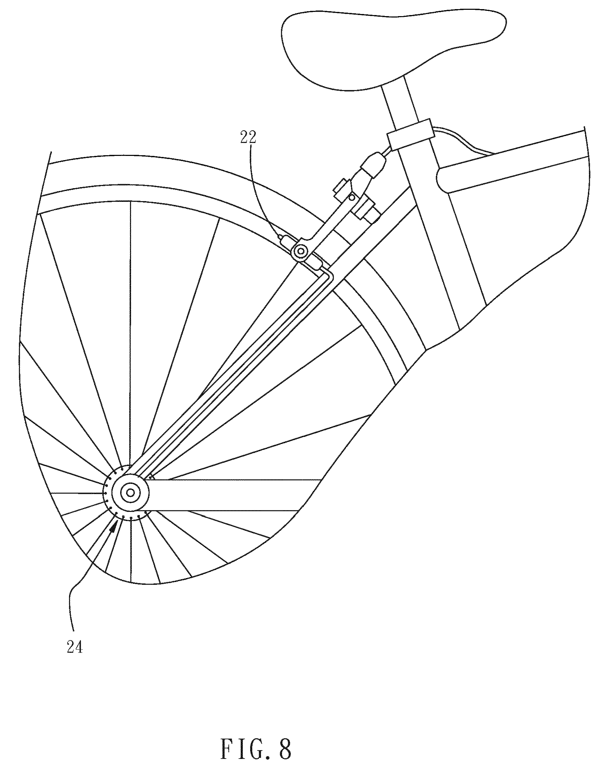

When the user operates the brake, the brake shoe **20** is moved with the brake caliper **30** toward the wheel rim **32** and then pressed on the wheel rim **32.** At this time, a friction force is produced between the brake shoe **20** and the wheel rim **32** to achieve a braking effect. At the same time, as shown in FIG. 4, the exposed end of each conductor **26** is kept in contact with the wheel rim **32** that is normally made of an electrically conductive material (such as metal, carbon fiber or any other electrically conductive material), and therefore the warning device **22,** the power supply device **24,** the conductors **26** and the wheel rim **32** are electrically connected, causing the warning device **22** to give off light (or to buzz). Therefore, a visual (or audio) warning signal is produced when the user operates the brake to stop the bicycle, enhancing bicycle-riding safety. Further, the power supply device **24** is not limited to the aforesaid built-in battery design. Alternatively, as shown in FIG. 6, the power supply device **24** can be a detachable battery mounted on the frame **34** of the bicycle and electrically connected with the warning device **22** and the conductors **26** by a connection interface **242.** Thus, the brake device **10** can use the warning device **22** to achieve a warning effect, and allows replacement of the power supply device **24** when the power supply device **24** fails. Therefore, the invention facilitates application and maintenance. Alternatively, the power supply device **24** can be a friction-driven dynamo as shown in FIG. 7, or a hub dynamo as shown in FIG. 8. According to the embodiment shown in FIG. 7, the power supply device **24** is a friction-driven dynamo comprising a dynamo body **244** and a wheel rotor **246.** The dynamo body **244** is electrically connected with the warning device **22** and the conductors **26,** comprising an armature **248.** The wheel rotor **246** is connected to the armature **248** of the dynamo body **244** and kept in contact with the wheel rim **32** of the bicycle. When the wheel rim **32** is rotated, the wheel rotor **246** is synchronously driven to rotate, and therefore the armature **248** of the dynamo body **244** is rotated with the wheel rotor **246** to drive the dynamo body **244** in generating electricity for the warning device **22.** According to the embodiment shown in FIG. 8, the power supply device **24** is a hub dynamo that generates electricity for the warning device **22** during rotation of the wheel rim **32.** Further, the electricity generated by the power supply device **24** can be stored in a storage battery and then provided to the warning device **22** by the storage battery.

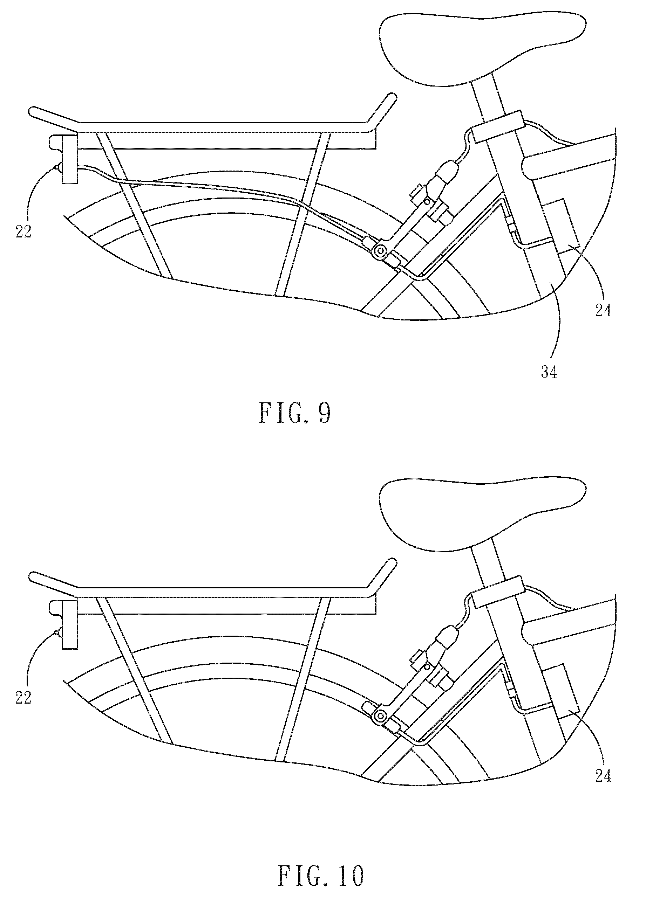

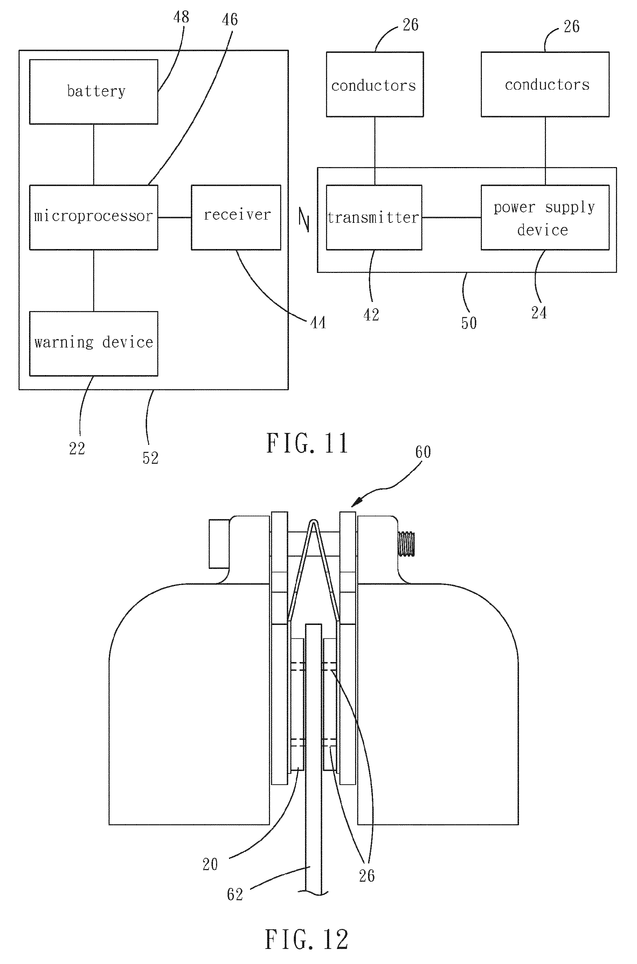

Further, the arrangement of mounting the warning device **22** in the rear end of the brake shoe **20** is not a limitation. Alternatively, the warning device **22** can be mounted on the frame **34** of the bicycle near the rear side of the bicycle, and electrically connected with the power supply device **24** by a wired method as shown in FIG. 9, or a wireless method as shown in FIG. 10. When a wireless method is adopted, RFID (radio frequency identification) technology is employed to transmit a brake signal. In this case, as shown in FIG. 11, the brake device **10** further comprises a transmitter **42,** a receiver **44,** a microprocessor **46** and a battery **48.** The transmitter **42** is electrically connected with one conductor **26** and the power supply device **24,** and integrated with the power supply device **24** to form a power supply unit **50** that is mounted on the frame **34** of the bicycle. The receiver **44** is electrically connected with the battery **48** and the warning device **22** by means of the microprocessor **46,** and integrated with the microprocessor **46,** the battery **48** and the warning device **22** to form a warning unit **52.** The warning unit **52** can be mounted on the frame **34** of the bicycle, an attached part of the bicycle, or a personal item carried by the bicycle rider. Thus, when the exposed end of each conductor **26** touches the wheel rim **32,** the transmitter **42** will be driven to transmit a brake signal to the receiver **44,** and the receiver **44** will transmit the signal to the microprocessor **46,** causing the microprocessor **46** to drive the warning device **22** in generating a warning signal.

The brake device **10** is not limited to the aforesaid rim brake design. Alternatively, the brake device **10** can be a disc brake, as shown in FIG. 12. According to this disc brake design, the brake shoes **20** are mounted on the respective disc brake calipers **60** and movable with the respective disc brake caliper **60** to abut against the brake disc **62.** When the brake shoes **20** are abutted against the brake disc **62,** the conductors **26** in the brake shoes **20** are forced into contact with the brake disc **62,** and therefore the circuit in the brake shoes **20** is closed, causing the warning device **22** to generate a warning signal.

In conclusion, the conductors of the brake device in accordance with the present example are fixedly mounted in the brake shoe(s) for positive connection by the wheel rim or brake disc of the bicycle, avoiding any contact error and assuring high reliability.

Although particular embodiments of the invention have been described in detail for purposes of illustration, various modifications and enhancements may be made. Accordingly, the invention is not to be limited except as by the appended claims.

## Claims

1. A bicycle brake device (10) comprising :
at least one brake shoe (20);
a warning device (22);
a power supply device (24) electrically connected with said warning device (22); and
two conductors (26) installed in said at least one brake shoe (20) and respectively electrically connected with said warning device (22) and said power supply device (24), each said conductor (26) having one end thereof exposed to the outside of the surface of said at least one brake shoe (20),
wherein said warning device (22) is mounted in a bicycle frame (34),
wherein said power supply device (24) is a detachable battery
**characterised in that** the detachable battery is electrically connected with said warning device (22) by a wireless connection method,
wherein the bicycle brake device (10) further comprises a transmitter (42), a receiver (44), a microprocessor (46) and a battery (48), said transmitter (42) being electrically connected with one said conductor (26) and said power supply device (24) and integrated with said power supply device (24) to form a power supply unit (50) mounted on a bicycle frame (34), said receiver (44) being electrically connected with said battery (48) and said warning device (22) by means of said microprocessor (46) and integrated with said microprocessor (46), said battery (48) and said warning device (22) to form a warning unit (52), said warning unit (52) being selectively mountable on said bicycle frame (34), an attached part of the bicycle or a personal item carried by a person riding the bicycle, and
wherein said conductors (26) are tin rods.

2. The bicycle brake device (10) as claimed in claim 1, being **characterized in that** said power supply unit (50) is a friction-driven dynamo.

3. The bicycle brake device (10) as claimed in claim 1, being **characterized in that** said power supply unit (50) is a hub dynamo.

4. The bicycle brake device (10) as claimed in claim 1, being **characterized in that** said at least one brake shoe (20) is connected to a bicycle brake caliper (60) by a connection rod (28).

5. The bicycle brake device (10) as claimed in claim 1, being **characterized in that** the number of said at least one brake shoe (20) is 2, and said conductors (26) are respectively mounted in the two brake shoes (20).

## Patentansprüche

1. Fahrradbremsvorrichtung (10) umfassend
mindestens einen Bremsschuh (20);
eine Wamvorrichtung (22);
eine Stromversorgungsvorrichtung (24), elektrisch verbunden mit der Wamvorrichtung (22); und
zwei Leiter (26), die in dem mindestens einen Bremsschuh (20) installiert sind und mit der Warnvorrichtung (22) und der Stromversorgungsvorrichtung (24) jeweils elektrisch verbunden sind, wobei jeder der Leiter (26) ein Ende davon aufweist, das an der Außenseite der Oberfläche des mindestens einen Bremsschuhs (20) freiliegt,
wobei die Warnvorrichtung (22) in einem Fahrradrahmen (34) montiert ist,
wobei die Stromversorgungsvorrichtung (24) eine abnehmbare Batterie ist,
**dadurch gekennzeichnet, dass** die abnehmbare Batterie durch ein drahtloses Verbindungsverfahren mit der Warnvorrichtung (22) elektrisch verbunden ist,
wobei die Fahrradbremsvorrichtung (10) weiter einen Sender (42), einen Empfänger (44), einen Mikroprozessor (46) und eine Batterie (48) umfasst, wobei der Sender (42) mit einem der Leiter (26) und der Stromversorgungsvorrichtung (24) elektrisch verbunden ist und mit der Stromversorgungsvorrichtung (24) integriert ist, um eine Stromversorgungseinheit (50) zu bilden, die an einem Fahrradrahmen (34) montiert ist, wobei der Empfänger (44) mit der Batterie (48) und der Warnvorrichtung (22) mittels des Mikroprozessors (46) elektrisch verbunden ist und integriert ist mit dem Mikroprozessor (46), der Batterie (48) und der Wamvorrichtung (22), um eine Wameinheit (52) zu bilden, wobei die Warneinheit (52) wahlweise montierbar ist an dem Fahrradrahmen (34), einem Anbauteil des Fahrrads oder einem persönlichen Gegenstand, der von der Person, die das Fahrrad fährt, getragen wird, und wobei die Leiter (26) Zinnstäbe sind.

2. Fahrradbremsvorrichtung (10) gemäß Anspruch 1, **dadurch gekennzeichnet, dass** die Stromversorgungseinheit (50) ein friktionsgetriebener Dynamo ist.

3. Fahrradbremsvorrichtung (10) gemäß Anspruch 1, **dadurch gekennzeichnet, dass** die Stromversorgungseinheit (50) ein Nabendynamo ist.

4. Fahrradbremsvorrichtung (10) gemäß Anspruch 1, **dadurch gekennzeichnet, dass** der mindestens eine Bremsschuh (20) durch einen Verbindungsstab (28) mit einem Fahrradbremssattel (60) verbunden ist.

5. Fahrradbremsvorrichtung (10) gemäß Anspruch 1, **dadurch gekennzeichnet, dass** die Anzahl des mindestens einen Bremsschuhs (20) 2 beträgt, und die Leiter (26) jeweils in den zwei Bremsschuhen (20) montiert sind.

## Revendications

1. Dispositif de frein de bicyclette (10) comprenant :
au moins une semelle de frein (20) ;
un dispositif d'alerte (22) ;
un dispositif d'alimentation électrique (24) connecté électriquement avec ledit dispositif d'alerte (22) ; et
deux conducteurs (26) installés dans ladite au moins une semelle de frein (20) et respectivement connectés électriquement avec ledit dispositif d'alerte (22) et ledit dispositif d'alimentation électrique (24), chaque dit conducteur (26) ayant une extrémité exposée à l'extérieur de la surface de ladite au moins une semelle de frein (20),
dans lequel ledit dispositif d'alerte (22) est monté dans un cadre de bicyclette (34),
dans lequel ledit dispositif d'alimentation électrique (24) est une batterie détachable, **caractérisé en ce que** la batterie détachable est connectée électriquement avec ledit dispositif d'alerte (22) par un procédé de connexion sans fil,
dans lequel le dispositif de frein de bicyclette (10) comprend en outre un émetteur (42), un récepteur (44), un microprocesseur (46) et une batterie (48), ledit émetteur (42) étant connecté électriquement avec un dit conducteur (26) et ledit dispositif d'alimentation électrique (24) et intégré avec ledit dispositif d'alimentation électrique (24) pour former une unité d'alimentation électrique (50) montée sur un cadre de bicyclette (34), ledit récepteur (44) étant connecté électriquement avec ladite batterie (48) et ledit dispositif d'alerte (22) au moyen dudit microprocesseur (46) et intégré avec ledit microprocesseur (46), ladite batterie (48) et ledit dispositif d'alerte (22) pour former une unité d'alerte (52), ladite unité d'alerte (52) étant montable électriquement sur ledit cadre de bicyclette (34), une partie fixée de la bicyclette ou un objet personnel porté par une personne montant la bicyclette, et
dans lequel lesdits conducteurs (26) sont des tiges en étain.

2. Dispositif de frein de bicyclette (10) selon la revendication 1, étant **caractérisé en ce que** ladite unité d'alimentation électrique (50) est une dynamo entraînée par friction.

3. Dispositif de frein de bicyclette (10) selon la revendication 1, étant **caractérisé en ce que** étant **caractérisé en ce que** ladite unité d'alimentation électrique (50) est une dynamo de moyeu.

4. Dispositif de frein de bicyclette (10) selon la revendication 1, étant **caractérisé en ce que** au moins une semelle de frein (20) est raccordée à un étrier de frein de bicyclette (60) par une tige de raccordement (28).

5. Dispositif de frein de bicyclette (10) selon la revendication 1, étant **caractérisé en ce que** le nombre de ladite au moins une semelle de frein (20) est 2 et lesdits conducteurs (26) sont respectivement montés dans les deux semelles de frein (20).
